## Europäisches Patentamt
## European Patent Office
## Office européen des brevets

(19)

(11) Veröffentlichungsnummer: **0 082 511**
**A1**

(12) # EUROPÄISCHE PATENTANMELDUNG

(21) Anmeldenummer: **82111797.5**

(22) Anmeldetag: **20.12.82**

(51) Int. Cl.³: **G 06 F 3/04**
**G 06 F 13/00**

(30) Priorität: **23.12.81 DE 3151120**

(43) Veröffentlichungstag der Anmeldung:
**29.06.83 Patentblatt 83/26**

(84) Benannte Vertragsstaaten:
**AT BE CH FR GB IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Klan, Friedrich, Dr.**
**Lindenring 149**
**D-8028 Taufkirchen(DE)**

(54) **Datenverarbeitungsanlage mit zentralem Arbeitsspeicher und mehreren in Serie geschalteten Prozessoren.**

(57) Zum Anschluß mehrerer eigenständiger Prozessoren (z.B. Ein-/Ausgabeprozessoren IOPO bis IOP2) an einen einzigen Port (PORTx) des Arbeitsspeichers (PMS) werden diese über individuelle Schnittstellensteuerungen (DSY) in Serie geschaltet, wobei die Schnittstellen (SSD) gegenüber der Portschnittstelle (SSI) erweitert sind, ohne daß sich die Schnittstellenbedingungen für den Port dadurch ändern.

Die Schnittstellensteuerung (DSY) arbeitet in gegenseitiger Abhängigkeit voneinander, so daß innerhalb der Prozessorkette entstehende Speicherzugriffsanforderungen mittels einer wechselseitigen Blockierung ohne Adressensteuerung einzeln nacheinander wirksam werden, wobei Weichensteuerungen (z.B. STB-ST, TERM-ST, MUX, 031, U31 bis U33) in den Schnittstellenleitungen den Übertragungsweg in beiden Richtungen zwischen Speicher (PMS) und dem jeweils aktiven Prozessor (z.B. IOP2) abhängig von Zustandsignalen (PCONO, 1 bzw. MCONO,1) bestimmen, die u.a. durch Schnittstellensignale (PO.STROBE, M1 . GO) beeinflußt werden. Beendigung einer Schreiboperation und Freigabe der aufgebauten Verbindung durch interne Schnittstellenleitung (TERM) der Kettenschaltung. Bei einer Leseoperation erfolgt Abbau des Verbindungsweges zum Speicher für die Anforderung bereits mit Beginn der Lesedatenübertragung bei Aufbau des rückwärtigen Verbindungsweges.

Für zusätzlichen Lock-Betrieb zwei zusätzliche interne Schnittstellenleitungen (LOCKREQ und DSYLOCK) in Verbindung mit einer Überwachungs-und Blockiersteuerung (LOCK-ST) in jeder Schnittstellensteuerung (DSY).

./...

EP 0 082 511 A1

FIG 1

FIG 3

SIEMENS AKTIENGESELLSCHAFT
BERLIN UND MÜNCHEN

Unser Zeichen
VPA
81 P 2 0 9 3 E

0082511

**Datenverarbeitungsanlage mit zentralem Arbeitsspeicher und mehreren in Serie geschalteten Prozessoren**

Die Erfindung betrifft eine Datenverarbeitungsanlage mit zentralem Arbeitsspeicher, der eine Reihe von Ports zum Anschluß jeweils einer eigenständigen Prozessoreinheit, z.B. Zentraleinheit, Ein-/Ausgabewerk, aufweist. Derartige Datenverarbeitungsanlagen sind zum Beispiel aus "Elektronische Rechenanlagen" 11 (1969), Heft 3, Seiten 151 bis 161 und 23 (1981), Heft 3, Seiten 107 bis 115 für Multiprozessoranlagen bekannt. Bei derartigen Datenverarbeitungsanlagen kann es vorkommen, daß die Anzahl der ursprünglich vorgesehenen Ports eines Arbeitsspeichers im Laufe der Zeit nicht ausreicht, um zum Beispiel noch weitere Ein-/Ausgabewerke als selbständige Prozessoren anschließen zu können. Andererseits müßte man durch Einrichten zunächst nicht benötigter Ports erhebliche Vorleistungen erbringen, die gegebenenfalls nicht genutzt werden.

Es ist daher Aufgabe der Erfindung, eine Datenverarbeitungsanlage zu schaffen, die den Anschluß mehrerer Prozessoren an einen einzigen Port ermöglicht. Diese Aufgabe wird gemäß der Erfindung durch die im Kennzeichen des Patentanspruches 1 genannten Merkmale gelöst. Danach können mehrere, mit gleichartigen Schnittstellensteuerungen ausgerüstete Prozessoren in Serie geschaltet werden, wobei die Kettungsschnittstellen weitgehend der Portschnittstelle entsprechen und wobei durch die gegenseitige Abhängigkeit der einzelnen Schnittstellensteuerungen in Verbindung mit den Weichensteuerungen in den

Kt 1 Stl / 21.12.81

Schnittstellenleitungen sichergestellt ist, daß ohne Änderung der Portschnittstelle und ohne eine übergeordnete adressengesteuerte Zugriffseinrichtung die Prozessorenkette durch den Port wie ein einziger angeschlossener Prozessor bedient werden kann.

Die neue Art der Kettenschaltung von Prozessoren ist dabei nicht vergleichbar mit Kettenanordnungen, wie sie z.B. in der DE-PS 23 48 002 berücksichtigt und beschrieben sind, denn alle diese bekannten Kettungsanordnungen arbeiten in der einen oder anderen Form mit gesonderten Auswahlleitungen und Auswahlmechanismen einer übergeordneten Steuerung für den Verbindungsaufbau zwischen dem Port und dem jeweiligen Prozessor. Bei der beanspruchten Lösung sind dagegen keine Auswahlleitungen zwischen Speicherport und den einzelnen Prozessoren der Kettenschaltung für die Abwicklung des normalen Speicherverkehrs erforderlich, und alle Kettenprozessoren sind gleichartig ausgebildet, so daß die Kette nach Bedarf modulartig erweitert werden kann.

Weiterbildungen der Erfindung ergeben sich aus den übrigen Patentansprüchen. Diese beziehen sich inbesondere auf den Ablauf des Verbindungsaufbaus zwischen einem der Prozessoren und dem Port zur Einleitung einer Speicheroperation und des davon unabhängigen Verbindungsaufbaus für die Übertragung von Lesedaten aus dem Speicher zum Prozessor unter Ausnutzung vorhandener Schnittstellensignale, die in vorteilhafter Weise zur Weichensteuerung in den einzelnen Schnittstellensteuerungen herangezogen werden. Weitere Patentansprüche beziehen sich auf Sonderfälle, wie die der Locksteuerung bei LOCK-Betrieb des Ports oder wie der Weiterleitung von Schreibfehlersignalen, wenn diese nicht rechtzeitig vor Verbindungsauflösung erkannt werden können.

Einzelheiten der Erfindung seien nachfolgend anhand eines Ausführungsbeispiels näher erläutert. Im einzelnen zeigen:

FIG 1   das Übersichtsschaltbild einer Datenverarbeitungsanlage gemäß der Erfindung mit den wesentlichen Schnittstellen,

FIG 2   einen Prozessor der Kette mit einer Übersicht seiner Schnittstellenanschlüsse für die Kettung,

FIG 3   ein Übersichtsschaltbild einer Schnittstellensteuerung mit den verschiedenen Schnittstellenanschlüssen gemäß FIG 1  und FIG 2,

FIG 4   ein Übersichtsschaltbild der Überwachungseinrichtung zur Weiterleitung von Anforderungen mit den Steuersignalen für die übrige Schnittstellensteuerung und den angeschlossen Prozessor,

FIG 5   ein Übersichtsschaltbild für die Erzeugung der Prozessorstrobeimpulse als Gültigkeitszeichen für die Übertragung von Daten in Verbindung mit einer Weichensteuerung zur Weiterleitung von Anforderungen,

FIG 6   ein Impulsdiagramm zu FIG 5  zur Erläuterung der Impulsregenerierung,

FIG 7   Ein Impulsdiagramm zu FIG 5  zur Erläuterung der Strobeimpulserzeugung,

FIG 8   Eine Weichensteuerung zur Beendigung von Schreiboperationen als Ergänzung zu FIG 3,

FIG 9   eine Weichensteuerung zur Erzeugung und Weiterleitung einer Identifizierkennung als Ergänzung
zu FIG 3,

FIG 10   eine Locksteuerung als Ergänzung zu FIG 3,

FIG 11   ein Impulsdiagramm zur Erläuterung des Verbindungsaufbaues bei Einleitung einer Speicheroperation und zur Erläuterung einer Schreiboperation   und

FIG 12   ein Impulsdiagramm zur Erläuterung einer Leseoperation.

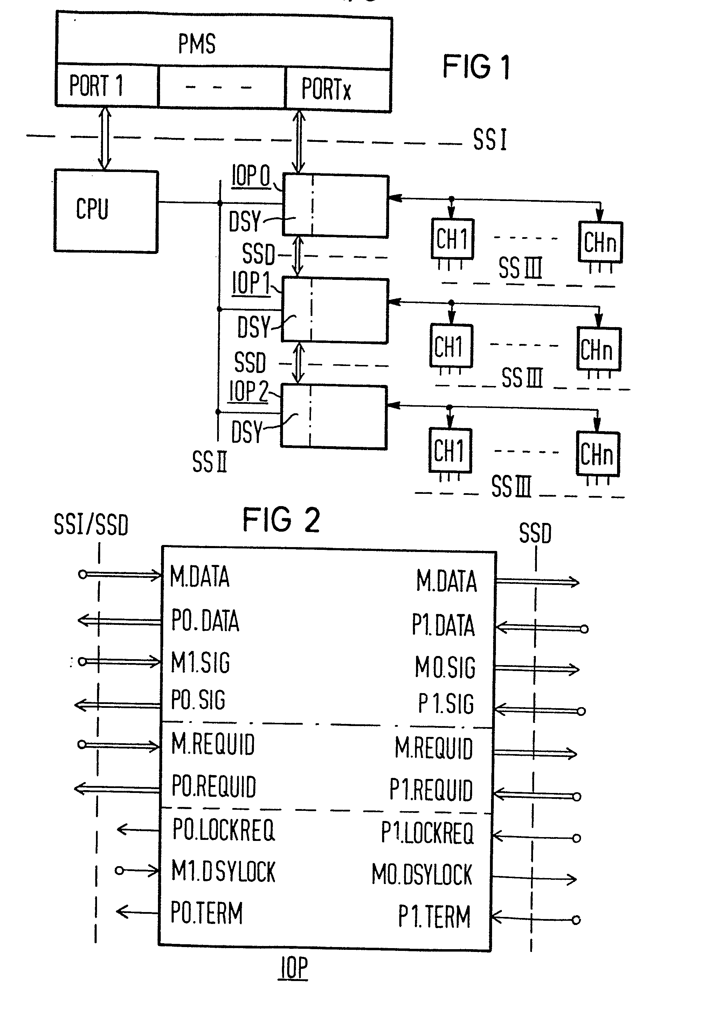

FIG 1   zeigt in Anlehnung an Bild 2  aus "Elektronische
Rechenanlagen" 11 (1969), Heft 3, Seite 152  den Aufbau
einer Datenverarbeitungsanlage mit dem zentralen Arbeitsspeicher PMS, der mehrere Ports PORT1  bis PORTx  für
den Anschluß eigenständiger Prozessoren aufweist. An
den Port PORT1 ist die Zentraleinheit CPU  und an den
Port PORTx  ist anstelle eines einzigen Ein-/Ausgabewerkes IOP  eine Kettenschaltung von mehreren Ein-/Ausgabewerken IOPO  bis IOP2  gemäß der Erfindung angeschlossen. Bei all diesen Ein-/Ausgabewerken der Kettenschaltung handelt es sich um selbständige Prozessoren, die
zum Beispiel gemäß der DE-AS 28 45 218  ausgebildet sein
können. Die von den einzelnen Ein-/Ausgabewerken IOPO
bis IOP2  zu bedienenden, aber nicht dargestellten peripheren Geräte sind über Kanäle CH1  bis CHn  an das jeweilige Ein-/Ausgabewerk angeschlossen.

Die Kettung der einzelnen Ein-/Ausgabewerke IOPO  bis
IOP2  erfolgt über den Ein-/Ausgabewerken individuell
zugeordnete gleichartige Schnittstellensteuerungen DSY, die
die für jedes Ein-/Ausgabewerk vorgesehenen Schnittstellenanschlüsse überwachen und steuern. Zwischen den einzelnen Ein-/Ausgabewerken IOP0 bis IOP2 sind dies die Schnittstellen SSD, während es auf der Anschlußseite des Ein-/Ausgabewerkes IOP0 zum Port PORTx des Arbeitsspeichers PMS die Schnittstelle SSI ist, die für alle Portanschlüsse gleich ist. Darüber hinaus sind die Zentraleinheit CPU und die einzelnen Ein-/Ausgabewerke IOP0 bis IOP2 über eine interne Schnittstelle SSII gekoppelt, und der Anschluß der einzelnen peripheren Steuerungen und Geräte erfolgt über/die Schnittstellen SSIII an die einzelnen Kanalsteuerungen CH1 bis CHn.

Die Schnittstellenanschlüsse für die einzelnen Ein-/Ausgabewerke IOP sind in FIG 2 gruppenmäßig zusammengefaßt. Dabei sind zwei Gruppen von Schnittstellenanschlüssen zu unterscheiden, nämlich die Schnittstellenanschlüsse im oberen Teil der FIG 2, die zugleich Bestandteil der Port-Schnittstelle SSI sind und zusätzlich die Schnittstellenanschlüsse im unteren Teil der FIG 2, die allein für die Kettensteuerung notwendig sind und daher nur innerhalb der Kettenschaltung benötigt werden. Es handelt sich dabei um drei zusätzliche Schnittstellenleitungen zu den Schnittstellenleitungen des Ports, wobei die Leitung TERM zwingend für die Kettensteuerung erforderlich ist, während die beiden Leitungen LOCKREQ und DSYLOCK nur erforderlich sind, wenn der Port einen LOCK-Betrieb vorsieht. Zwei weitere Leitungsbündel, M.REQUID und P..REQUID, die eine Identifizierkennung liefern, sind lediglich zusätzlich erforderlich, wenn sie die Portschnittstelle SSI nicht bereits vorsieht. Die übrigen Leitungsbündel im oberen Teil der FIG 2, nämlich M.DATA für die Daten vom Arbeitsspeicher PMS, P..DATA für die Daten von einem Ein-/Ausgabeprozessor zum Arbeitsspeicher, M..SIG für Speichersignale und P..SIG für Prozessorsignale, sind normalerweise Bestandteil einer jeden Speicherschnittstelle. Die zum Teil unterschiedlichen Bezeichnungen der beidseitigen Anschlüsse der einzelnen Schnittstellenleitungen oder Schnittstellenleitungsbündel soll
darauf hinweisen, daß ankommende Daten oder Signale gegebenenfalls geändert weitergeleitet werden.

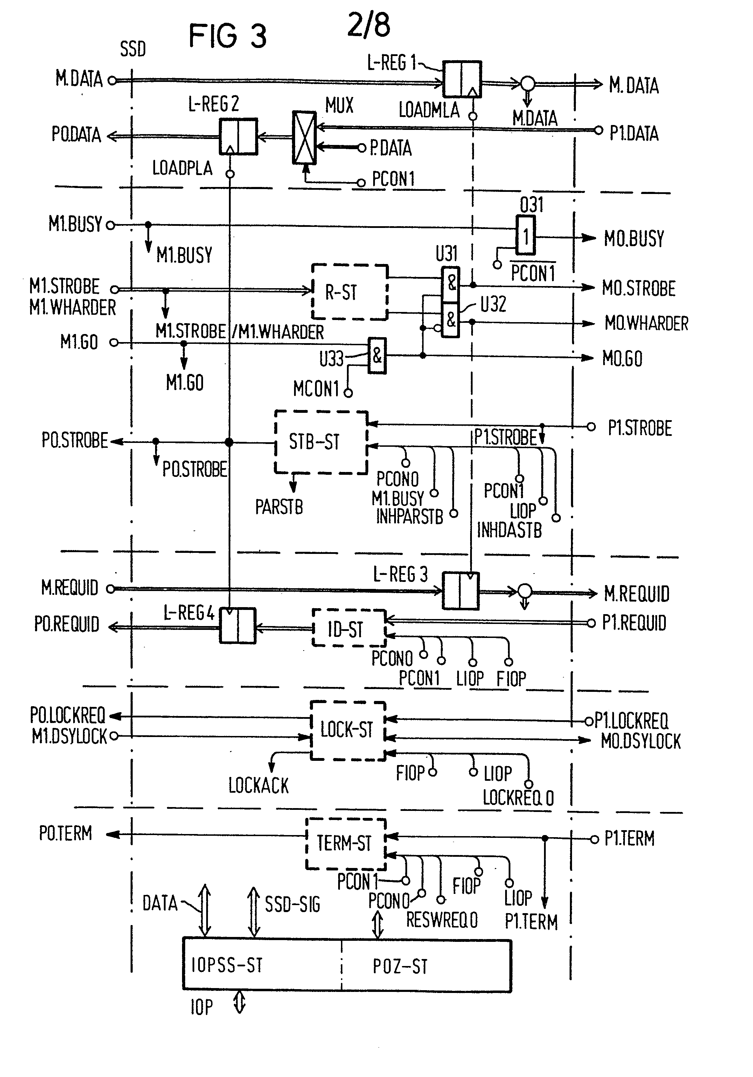

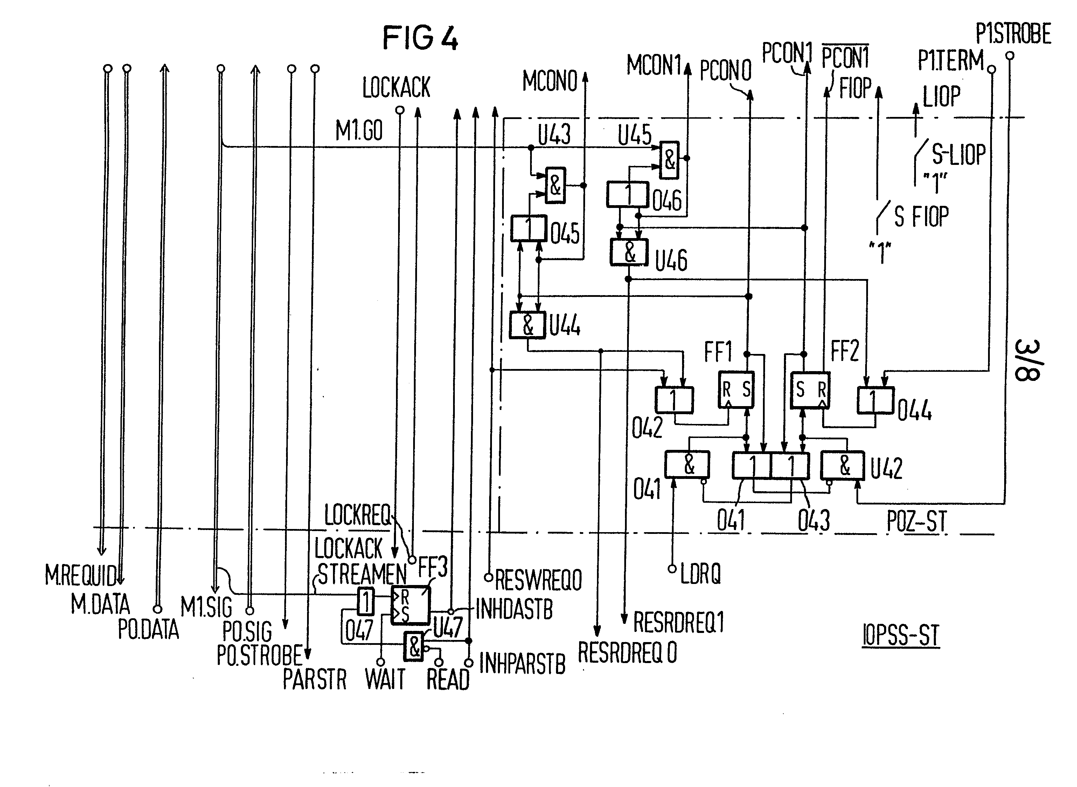

FIG 3 zeigt eine schematische Übersicht der in jedem
der Ein-/Ausgabewerke IOPO bis IOP2 vorgesehenen
Schnittstellensteuerungen DSY mit den für die Steuerung
der Kettungsschaltung wesentlichen Schnittstellenanschlüssen unter Beibehaltung der in FIG 2 gezeigten Gruppierung
der Schnittstellenleitungen. Von ausschlaggebender Bedeutung für den Steuerungsablauf innerhalb der Schnittstellensteuerung DSY ist dabei die im unteren Teil
der FIG 3 lediglich mit einem Kästchen angedeutete
Überwachungs- und Zuteilungssteuerung POZ-ST, die auf
der anderen Seite mit der Schnittstellensteuerung IOPSS-
ST für den angeschlossenen Ein-/Ausgabeprozessor IOP
eng zusammenarbeitet. Für das Verständnis der Schnittstellensteuerung DSY gemäß FIG 3 sei daher diese Überwachungssteuerung POZ-ST anhand von FIG 4 zunächst näher
erläutert.

Die in FIG. 4 gezeigte Steuerung POZ-ST gliedert sich
in zwei Teile, nämlich die beiden Flipflops FF1 und
FF2 mit den zugehörigen UND-Gattern U41 und U42 sowie
den ODER-Gattern O41 bis O44 zur Überwachung der anstehenden Anforderungen zur Herstellung einer Verbindung
zum Speicherport als dem einen Teil und den UND-Gattern
U43 bis U46 sowie den ODER-Gattern O45 und O46 zur
Wegeeinstellung für die vom Speicherport auszusendenden
Daten und Signale als dem anderen Teil. Hinzu kommen
zwei Steuerschalter S-FIOP und S-LIOP,die jeweils kennzeichnen, ob der angeschlossene Prozessor der jeweils

**0082511**

erste oder der jeweils letzte Prozessor innerhalb der Kettenschaltung ist, was durch die entsprechenden Signale FIOP für den ersten Prozessor und LIOP für den letzten Prozessor angezeigt wird.

Die Steuerung POZ-ST hat jeweils zwei Anforderungen zu überwachen, nämlich die aus dem eigenen Prozessor über dessen Schnittstellensteuerung IOPSS-ST gelieferte Anforderung LDREQ und die von einem in der Kettenachgeschalteten Prozessor stammende Anforderung, die durch das Signal P1.STROBE gekennzeichnet wird. Für die Anforderung eines nachgeschalteten Prozessors wird also jeweils das die Übertragung von Prozessordaten zum Port begleitende Gültigkeitszeichen benutzt. Beide Anforderungen werden vollkommen gleichwertig behandelt, es ist also keine der Anforderung priorisiert, so daß die jeweils zuerst eintreffende Anforderung wirksam wird und mit den ausgelösten Zustandssignalen die Weichensteuerungen der Schnittstellensteuerung DSY beeinflußt. Diese Zustandssignale werden von den Flipflops FF1 und FF2 abgeleitet, wobei das Flipflop FF1 mit dem Signal PCON0 die Annahme der eigenen Anforderung und das Flipflop FF2 mit dem Signal PCON1 die Annahme der fremden Anforderung signalisiert. Die Ansteuerung der Setzeingänge der Flipflops FF1 und FF2 erfolgt daher über ein UND-Gatter U41 bzw. U42, die über den invertierten Steuereingang wechselseitig gesperrt werden können, so daß die über den anderen Signaleingang anstehenden Anforderungen LDREQ bzw. P1.STROBE vorerst nicht wirksam werden können, bis die Flipflops wieder zurückgesetzt sind.

Das Zurücksetzen der Flipflops FF1 bzw. FF2 erfolgt gesteuert durch die den Rücksetzeingängen vorgeschalteten ODER-Gatter O42 bzw. O44 entweder am Ende einer Schreiboperation, was bei einer eigenen Anforderung durch das Signal RESWREQO aus der Schnittstellensteuerung IOPSS-ST oder aber bei einer fremden Anforderung durch das ankommende Schnittstellensignal P1.TERM angezeigt wird, oder am Ende einer Leseoperation abhängig von den Signalen RESRDREQO bzw. RESRDREQ1, die vom zweiten Teil der Steuerung POZ-ST geliefert werden. Diese Signale werden erst mit dem vom Arbeitsspeicher PMS gesendeten Schnittstellensignal M1.GO ausgelöst, das während der gesamten Lesedatenübertragung gesendet wird und dabei die Strobeimpulse für die Lesedaten begleitet. Dieses Signal wirkt gleichzeitig auf die beiden UND-Gatter U43 und U45 ein, die abhängig von den Flipflop-Signalen PCONO bzw. PCON1 aufgesteuert werden. Das auf diese Weise abgeleitete Zustandssignal MCONO kennzeichnet das Ende des Verbindungsweges für vom Arbeitsspeicher PMS gesendete Lesedaten, die demzufolge dem eigenen Prozessor zuzuführen sind, während das andere Zustandssignal MCON1 anzeigt, daß die empfangenen Lesedaten an einen nachgeschalteten Prozessor weiterzuleiten sind. Von diesen Zustandssignalen werden außerdem mittels der UND-Glieder U44 bzw. U46 die die Lesedatenübertragung anzeigenden Steuersignale RESRDREQO und RESRDREQ1 abgeleitet.

In diesem Zusammenhang sei bereits auf eine Eigenart der Steuerung POZ-ST hingewiesen, die für den gesamten Speicherverkehr der Kettenschaltung von Bedeutung ist: Die durch eine Anforderung gesetzten Flipflops FF1 bzw. FF2 werden nämlich bereits mit Beginn der Lesedatenübertragung zurückgesetzt, so daß parallel zur Leseübertragung bereits neue Anforderungen entgegengenommen werden können und damit der Verbindungsweg für Daten und Signale zum Arbeitsspeicher für eine neue Speicheroperation bereits durchgeschaltet werden kann, wenn der rückwärtig

aufgebaute Verbindungsweg für die Lesedatenübertragung
noch steht.

Im unteren Teil der FIG 4 sind weiterhin die Signale
angegeben, die im Rahmen von Speicheroperationen zwischen der Schnittstellensteuerung DSY für die Kettungsschaltung und der Prozessorschnittstellensteuerung IOPSS-
ST auszutauschen sind.

Zurückkehrend zu FIG 3 seien nachfolgend zunächst die
Verknüpfungen der gleichnamigen Schnittstellenanschlüsse, soweit sie für das Verständnis der Erfindung notwendig sind, näher erläutert:

Die vom Arbeitsspeicher PMS gelieferten Daten M.DATA
werden einem Register L-REG1 zugeführt und jeweils
mit einem vom Gültigkeitszeichen MO.STROBE abgeleiteten Steuerimpuls LOADMLA weitergeleitet, so daß
sie sowohl vom nachfolgenden Prozessor über den Schnittstellenanschluß als auch vom eigenen Prozessor entgegengenommen werden können. Analoges gilt für die zum Arbeitsspeicher PMS zu sendenden Prozessordaten PO.DATA,
wobei für die Weiterleitung ein Steuerimpuls LOADPLA
von dem zugehörigen Gültigkeitszeichen PO.STROBE abgeleitet wird. Da für die Ansteuerung des zuständigen
Registers L-REG2 zwei Datenquellen zur Verfügung
stehen, nämlich die aus dem eigenen Prozessor und die
aus dem nachgeschalteten Prozessor am Eingang P1.DATA,
ist dem Register L-REG2 ein Multiplexer MUX vorgeschaltet,
der abhängig vom Zustandssignal PCON1 entweder das
eine oder das andere Datenleitungsbündel durchschaltet.

Von den Arbeitsspeichersignalen sind lediglich vier
mit ihren Schnittstellenanschlüssen gezeigt. Es sind
dies die Signale BUSY, STROBE, WHARDER und GO mit folgenden Bedeutungen:

M1. BUSY : Durch dieses Signal zeigt der Arbeitsspeicher an, daß er zur Zeit keine Informationen entgegennehmen kann. Es wird über ein ODER-Gatter O31 über den Schnittstellenanschluß MO.BUSY an die rückwärtigen Prozessoren der Kette weitergeleitet, wobei das Signal $\overline{PCON1}$ überlagert werden kann, um anzuzeigen, daß bereits der eigene Prozessor sich um eine Verbindung mit dem Arbeitsspeicher bemüht.

M1.GO: Dieses Signal wird vom Arbeitsspeicher vor dem ersten Gültigkeitszeichen für gleichzeitig übertragene Lesedaten gesendet und dauert so lange an, bis die gesamte Lesedatenübertragung abgeschlossen ist. Es wird über die UND-Schaltung U33 an den rückwärtigen Schnittstellenanschluß MO.GO weitergeleitet, wenn das Zustandssignal MCON1 der Steuerung POZ-ST vorliegt, also die empfangenen Arbeitsspeicherdaten an einen nachgeordneten Prozessor weiterzuleiten sind.

M1.STROBE : Dieses vom Arbeitsspeicher gesendete Signal gibt die gleichzeitig gesendeten Lesedaten für die Auswertung frei. Es wird über eine Impulserneuerungsschaltung R-ST dem nachgeschalteten UND-Gatter U31 an den rückwärtigen Schnittstellenanschluß MO.STROBE weitergeleitet, wenn gleichzeitig das UND-Gatter U33 aufgesteuert ist. Auf diese Weise wird sichergestellt, daß die Gültigkeitszeichen nur dann an die rückwärtigen Prozessoren der Kettenschaltung weitergeleitet werden, wenn einer davon als aktiver Prozessor der Empfänger ist.

M1.WHARDER : Hierbei handelt es sich um ein Fehlersignal, das vom Arbeitsspeicher gesendet wird, wenn bei einer Schreiboperation ein nicht behebbarer Fehler erkannt worden ist. Dieses Fehlersignal wird in gleicher Weise wie das Gültigkeitssignal durch die
Steuerung R-ST erneuert und über ein UND-Gatter
U32 an den entsprechenden rückwärtigen Schnittstellenanschluß MO.WHARDER weitergeleitet, allerdings nur, wenn nicht gleichzeitig das UND-Gatter
U33 aufgesteuert ist.

Alle übrigen, vom Arbeitsspeicher PMS gesendeten, aber
nicht dargestellten Schnittstellensignale werden in gleicher
Weise wie das Schnittstellensignal M..GO über ein UND-
Gatter entsprechend dem UND-Gatter U33 abhängig von den
Zustandssignalen PCON1 bzw. MCON1 der Steuerung POZ-ST
geleitet, je nachdem, ob diese Signale im Rahmen einer
Schreib- oder einer Leseoperation anfallen.

Von den zum Arbeitsspeicher PMS führenden Prozessorsignalen ist lediglich die das Gültigkeitszeichen führende Schnittstellenleitung mit den Schnittstellenanschlüssen PO.STROBE und P1.STROBE gezeigt. Die Verbindung
beider Schnittstellenanschlüsse wird dabei durch die
Steuerung der STB-ST hergestellt, die einerseits als Weiche
arbeitet und entweder das am Schnittstellenanschluß
P1.STROBE ankommende Signal erneuert weiterleitet, wenn
der eigene Prozessor nicht der letzte in der Kette ist,
was durch das Signal LIOP aus der Steuerung POZ-ST angezeigt wird, oder aber ein auf Anforderung des eigenen
Prozessors erzeugtes Gültigkeitssignal weiterleitet.
Weitere Einzelheiten der Steuerung STB-ST werden später
noch ausführlich erläutert.

Alle übrigen zum Arbeitsspeicher führenden Schnittstellenleitungen für Prozessorsignale werden wegen der beiden
möglichen Quellen, eigener Prozessor oder in der Kette
nachgeordneter Prozessor, jeweils über Weichen geleitet,
die abhängig von den Zustandssignalen PCON1 und PCONO
gesteuert werden.

Neben den bereits angesprochenen Schnittstellenanschlüssen mit ihren Verknüpfungen ist für die Durchführung der Erfindung lediglich das Schnittstellenanschlußpaar P1.TERM /PO.TERM erforderlich, um das Ende einer Schreiboperation in den vorgeordneten Schnittstellensteuerungen DSY der Kettenschaltung anzuzeigen. Innerhalb einer solchen Schnittstellensteuerung sind die beiden Schnittstellenanschlüsse über die Steuerung TERM-ST miteinander verbunden, die gleichfalls als Weiche arbeitet und entweder das am Anschluß P1.TERM ankommende Signal durchschaltet, ober aber abhängig von den Signalen der Steuerung POZ-ST ein selbständig erzeugtes Signal weiterleitet. Auch diese Steuerung TERM-ST wird im nachfolgenden noch näher erläutert werden.

Die im übrigen gezeigten Schnittstellenanschlußpaare beziehen sich auf zusätzliche Steuermaßnahmen, die für den Speicherverkehr nicht zwingend erforderlich sind.

Es sind dies die Schnittstellenanschlüsse P1.REQUID und PO.REQUID, die über eine Weichensteuerung ID-ST miteinander verknüpft sind, um eine Identifizierkennung an den Arbeitsspeicher zu übertragen, die bei Auftreten eines Schreibfehlers zusammen mit dem Fehlersignal M1.WHARDER über die Schnittstellenleitungen M.REQUID wieder zurückübertragen wird, damit der Fehler dem zuständigen Prozessor der Kettenschaltung eindeutig zugeordnet werden kann. Auch in diesem Falle wird die in der einen oder anderen Richtung weiterzuleitende Identifizierkennung über jeweils ein Register L-REG4 bzw. L-REG3 geleitet, wobei die Zwischenspeicherung in der Vorwärtsrichtung wie beim Register L-REG2 von dem Steuerimpuls LOADPLA und für die Zwischenspeicherung in der Rückwärtsrichtung von einem vom Ausgang des UND-Gatters U32 für die Ansteuerung des Schnittstellenanschlusses MO.WHARDER abgeleiteten Steuerimpuls abhängig ist.

Eine weitere zusätzliche Steuermaßnahme ergibt sich, wenn der Port für Lock-Betrieb ausgerüstet ist, also in der Lage ist, alle übrigen Ports vorübergehend zu sperren, so daß Speicherzugriffe nur von dem an diesem Port angeschlossenen Prozessor ausgeführt werden können. Entsprechend muß daher der einen Lockzugriff ausführende Prozessor innerhalb der Kettenschaltung gegenüber Anforderungen durch die übrigen Prozessoren gesichert werden. Zur Durchführung dieser Sicherung werden zwei zusätzliche Schnittstellenleitungen innerhalb der Kettenschaltung benötigt, nämlich eine für die Anforderung LOCKREQ und eine für die Quittungs- und Sperrmeldung DSYLOCK. Die Anschlüsse beider Schnittstellenleitungen P1.LOCKREQ, PO.LOCKREQ, M1.DSYLOCK und MO.DSYLOCK sind über die Steuerung LOCK-ST miteinander verknüpft.

Auch die für die zusätzlichen Steuermaßnahmen vorgesehenen Steuerungen werden nachfolgend noch ausführlicher beschrieben.

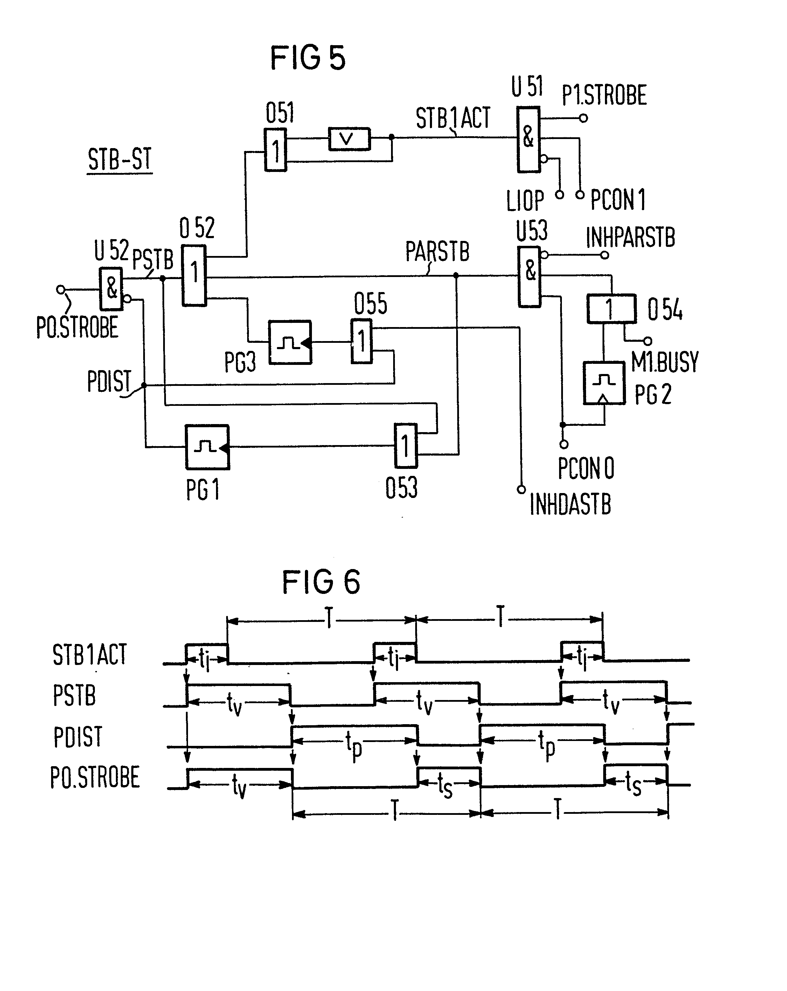

Zunächst aber zur FIG 5, die das Schaltbild der Steuerung STB-ST von FIG 3 zeigt. Diese Steuerung erfüllt insgesamt vier Funktionen:
Die erste Funktion besteht in der Weichensteuerung zur Durchschaltung des fremden Quellsignales P1.STROBE oder des selbst zu erzeugenden Quellsignales, das zugleich mit dem Zustandssignal PCONO ausgelöst wird. Hierzu dienen die beiden UND-Gatter U51 und U53, die vom Zustandssignal PCON1 bzw. PCONO abhängig sind. Das Gatter U51 wird dabei für das fremde Quellsignal P1.STROBE durchlässig, wenn der eigene Prozessor nicht der letzte innerhalb der Kettenschaltung ist, und das Signal LIOP also nicht sperrt.

Das am Ausgang des Gatters U51 erzeugte Signal STB1ACT wird gemäß der zweiten Funktion dieser Steuerung aufgefrischt und ab dem zweiten Impuls auf ein vorgegebenes Impulspausenverhältnis gebracht, indem das Signal mittels

des Verzögerungsgliedes und des ODER-Gatters O51 verbreitert wird und über das ODER-Gatter O52 als Signal PSTB zunächst auf den Ausgang PO.STROBE des ungesperrten UND-Gatters U52 durchgreift. Weiterhin wird mit der Rückflanke des Signales PSTB über das ODER-Gatter O53 der Impulsgeber PG1 angestoßen, der einen Pausenimpuls PDIST vorgegebener Länge liefert und das Gatter U52 sperrt, so daß ein weiterer Signalimpuls STB1ACT erst mit Beendigung des Pausenimpulses PDIST auf den Ausgang des Gatters U52 durchgreifen kann.

FIG 6 zeigt ein zugehöriges Impulsdiagramm, demzufolge Impulse der Dauer $t_i$ mit vorgegebenem Impulsabstand T auf die Dauer $t_v$ verbreitert werden und dann ab dem zweiten Signalimpuls einer Folge auf die Solldauer $t_s$ bei gleichem Impulsabstand T gebracht werden. In gleicher Weise arbeitet z. B. auch die in FIG 3 gezeigte Steuerung R-ST für die PMS-Signale M1.STROBE und M1.WHARDER.

Die dritte Funktion der Steuerung STB-ST besteht in der Erzeugung des ersten,die Parameterdaten gültig machenden Parameter-Strobimpulses bei einer Anforderung des eigenen Prozessors, der mit dem Wegschalten des Sperrsignals INHPARSTB das Gatter U53 für das Zustandssignal PCONO freigibt, das zugleich über einen Impulsgenerator PG2 und ODER-Gatter O54 auf den dritten Signaleingang des Gatters U53 einwirkt. Der Impulsgenerator PG2 sichert dabei für eine Mindestdauer die Durchlässigkeit des Gatters U53, falls das weitere Steuersignal M1.BUSY, auf dessen Bedeutung später noch eingegangen wird, bereits logisch Null ist. Anderenfalls bestimmt dieses Signal über das Gatter O54 die Dauer des Signals PARSTB, das ebenfalls über das Gatter O52 zum Signal PSTB wird, das über das Gatter U52 auf den Ausgang der Schaltung als Signal PO.STROBE durchgreift. Am Ende dieses Impulses PARSTB, wird über das Gatter O53 der Impulsgeber PG1 angelassen und das Gatter U52 gesperrt. Gleichzeitig wird in der Prozessorschnittstellensteuerung IOPSS-ST
das Sperrsignal INHPARSTB für die Sperrung des Gatters
U53 wieder wirksam geschaltet. Dies führt bei einer
Schreiboperation - READ = 0 - zur Abschaltung des Sperrsignals INHDASTB und damit zur Einleitung der vierten
Funktion der Steuerung STB-ST, nämlich zur Erzeugung von
Schreibstrobeimpulsen, Mit dem Löschen des Sperrsignals
INHDASTB wird nämlich das ODER-Gatter O55 für das Signal
PDIST frei, so daß am Ende des Pausenimpulses der Impulsgeber PG3 angelassen und über die Gatter O52 und U52
ein weiterer Impuls PO.STROBE für die Übertragung eines
Datenwortes erzeugt wird.

Abhängig von der Art des Schreibvorganges werden entweder ein Schreibimpuls oder vier aufeinanderfolgende
Schreibimpulse erzeugt, je nachdem, ob z. B. nur ein
Datenwort oder aber vier Datenwörter im Streamablauf
gesendet werden sollen. Das Sperrsignal INHDASTB wird
daher während des ersten Schreibimpulses wieder wirksam
und gegebenenfalls erneut aufgehoben, wenn vom Arbeitsspeicher PMS die Rückmeldung STREAMEN vorliegt. Dabei
kann zwischen dem ersten und zweiten Schreibimpuls gegebenenfalls eine größere Pause liegen. Anderenfalls
werden alle vier Schreibimpulse in gleichmäßigem Abstand
aufeinander folgend durch das Zusammenspiel der beiden
Impulsgeber PG1 und PG3 erzeugt. Die Impulsgeber PG1
bis PG3 können in an sich bekannter Weise als flankengesteuerte monostabile Kippstufen ausgebildet sein.

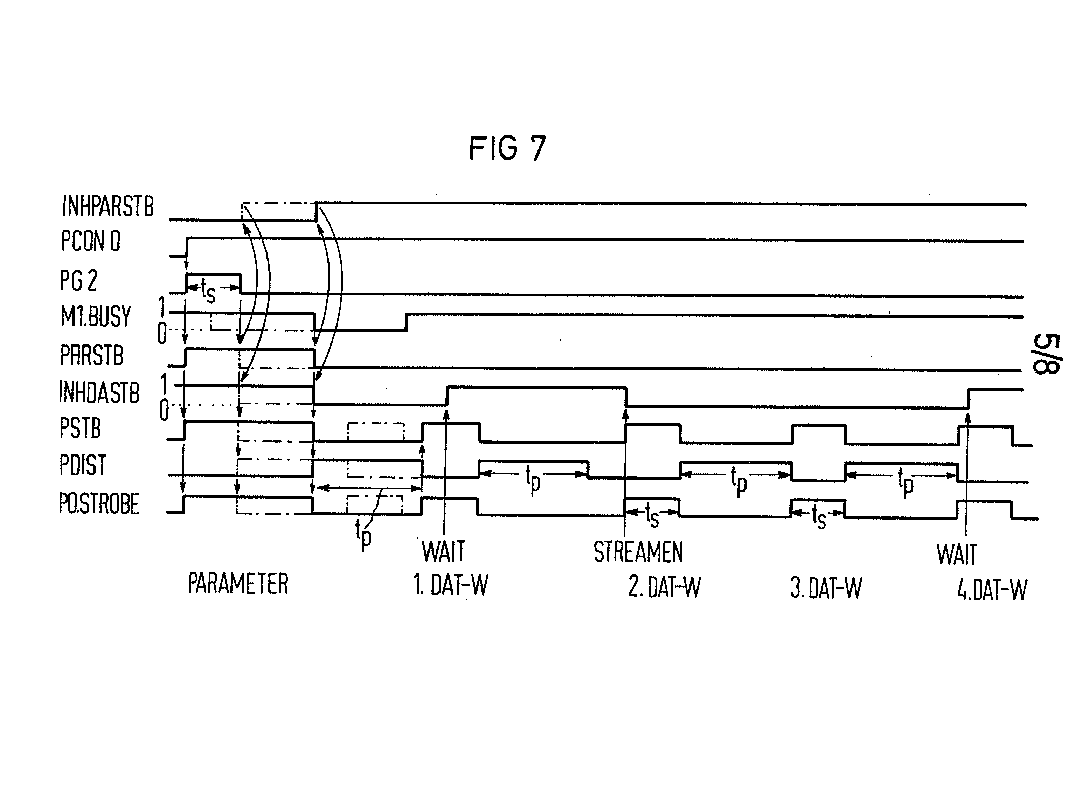

FIG 7 zeigt ein entsprechendes Impulsdiagramm, wobei im
ersten Teil bezüglich des Parameter-Strobeimpulses der
Einfluß des Signales M1.BUSY auf die Dauer des Strobeimpulses durch punktierte bzw. strichpunktierte Linien
angedeutet ist. Ist dieses Signal bereits logisch Null
oder endet es vor der Standzeit des Impulsgebers PG2,
dann ist die Dauer auf die vorgegebene Sollzeit $t_s$
beschränkt. Im anderen Falle dauert der Strobeimpuls entsprechend lange an. Entsprechend früher oder später folgt
bei einer Schreiboperation mit vorgegebenem Abstand $t_p$
der erste Schreib-Strobeimpuls mit der Dauer $t_s$, dem sich
gegebenenfalls bei Eintreffen des Signales STREAMEN
drei weitere Schreib-Strobeimpuls mit gegenseitigem Abstand $t_p$ folgen.

Die entsprechende Steuerung des Signales INHDASTB ist
im Teil der Prozessorschnittstellensteuerung IOPSS-ST
von FIG 4 schematisch angedeutet. INHPARSTB = 1 setzt
mit READ = O über die Gatter U47 und O47 das Flipflop FF3 zurück, das mit WAIT zurückgesetzt wird. Mit STREAMEN wird
über das ODER-Gatter O47 das Flipflop FF3 erneut zurückgesetzt
und mit einem erneuten WAIT endgültig wieder gesetzt.

Die übrigen in FIG 3 gezeigten Steuerungen sind dagegen
wesentlich einfacher aufgebaut.

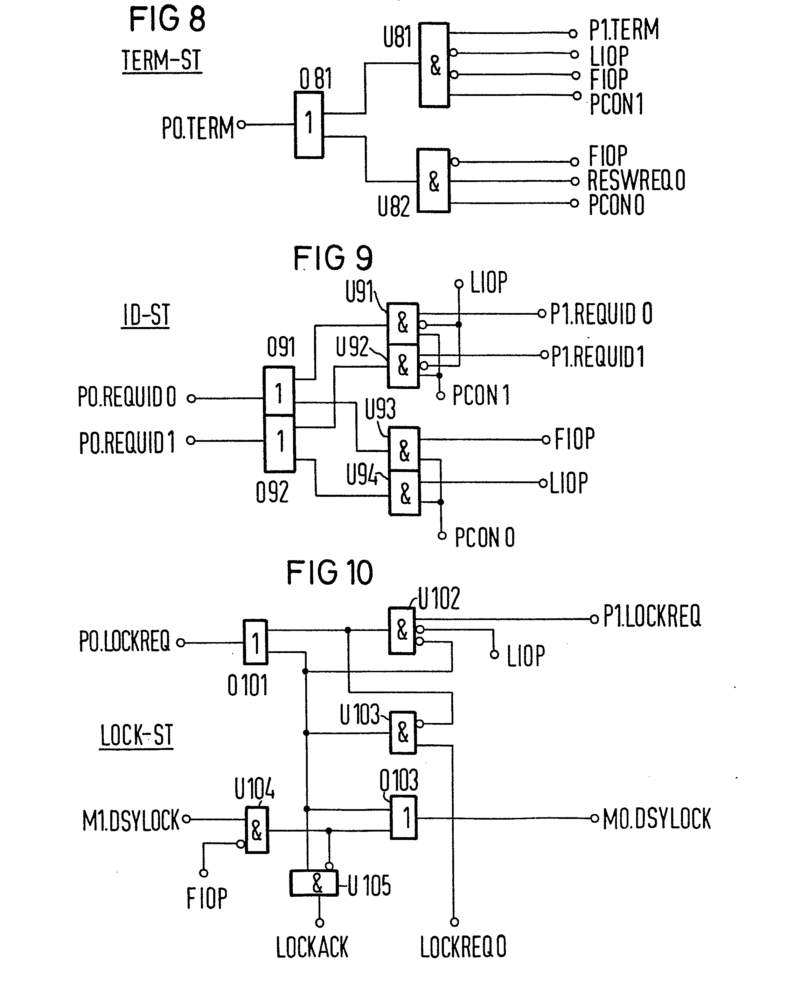

Die Steuerung TERM-ST besteht gemäß FIG 8 aus zwei UND-
Gattern U81 und U82, deren Ausgänge über ein ODER-Gatter
O81 zusammengefaßt sind. Das Zustandssignal PCON1 steuert
am Gatter U81 die Weiterleitung des fremden Quellsignales
P1.TERM, die nur möglich ist, wenn der eigene Prozessor
nicht der letzte - Signal LIOP - und nicht der erste
- Signal FIOP - Prozessor innerhalb der Kette ist, da
es sich nur um ein internes Schnittstellensignal der
Kettenschaltung handelt. Das Zustandssignal PCONO steuert
am Gatter U82 die Weiterleitung des das Schreibende bei eigener Anforderung anzeigenden Signals RESWREQO, wobei eine
Weiterleitung ebenfalls nur möglich ist, wenn es sich
nicht um den ersten Prozessor innerhalb der Kettenschaltung
handelt.

Ähnlich ist auch die in FIG 9 gezeigte Weichensteuerung
ID-ST aufgebaut. Hierbei steuern die beiden Zustandssignale
PCON1 und PCONO jeweils zwei UND-Gatter, nämlich U91 und U92 bzw. U93 und U94, weil zwei Schnittstellenleitungen zu steuern sind, und die Ausgänge der UND-Gatter werden paarweise durch die ODER-Gatter O91 und O92 auf jeweils einen Ausgang geschaltet. Da es sich hierbei um die Identifizierkennung handelt, wird die eigene Identifizierkennung im vorliegenden Fall unmittelbar aus den Signalen FIOP und LIOP abgeleitet. Ist dabei keines der beiden Signale wirksam, so wird bei einer Kettenschaltung von drei Prozessoren der mittlere Prozessor, also IOP1, gekennzeichnet. Wenn dagegen beide Signale gleichzeitig wirksam werden, so wird die Kette nur von einem einzigen Prozessor gebildet.

FIG 10 zeigt schließlich die Anforderungs- und Blockiersteuerung LOCK-ST für die Durchführung des Lockbetriebes. Das Vorliegen einer Anforderung P1.LOCK bzw. LOCKREQO wird mittels der UND-Gatter U102 und U103 überwacht, die sich gegenseitig sperren, so daß nur die zuerst anliegende Anforderung berücksichtigt wird und über das nachfolgende ODER-Gatter O101 zur nächsten Kettungsstufe weitergeleitet wird, wenn es sich nicht um den ersten Prozessor der Kettenschaltung handelt, bei dem das Anforderungssignal am Anschluß PQLOCKREQ ins Leere laufen würde. Mit der gegensinnig verlaufenden Schnittstellenleitung DSYLOCK wird am Schnittstellenanschluß M1.DSYLOCK gekennzeichnet, ob bereits eine Lockanforderung von einem                vorgeordneten Prozessor vorliegt. Handelt es sich um den ersten Prozessor der Kette, ist das UND-Gatter U104 immer gesperrt. Das Zumzugekommen der eigenen Anforderung am Ausgang des Gatters U103 und die Sperrung des Gatters U104 wird am Ausgang des UND-Gatters U105 fortlaufend überwacht, und wenn das entsprechende Ausgangssignal LOCKACK eine vorgegebene Mindestzeit angedauert hat, so wird dies als Quittung dafür gewertet, daß die eigene Anforderung zum Zuge gekommen ist. Zusätzlich werden über das ODER-Gatter O103

die Ausgangssignale der UND-Gatter U104 und U103 an den Schnittstellenanschluß MO.DSYLOCK weitergeleitet, um nachgeschaltete Prozessoren über den Frei- oder Sperrzustand zu informieren.

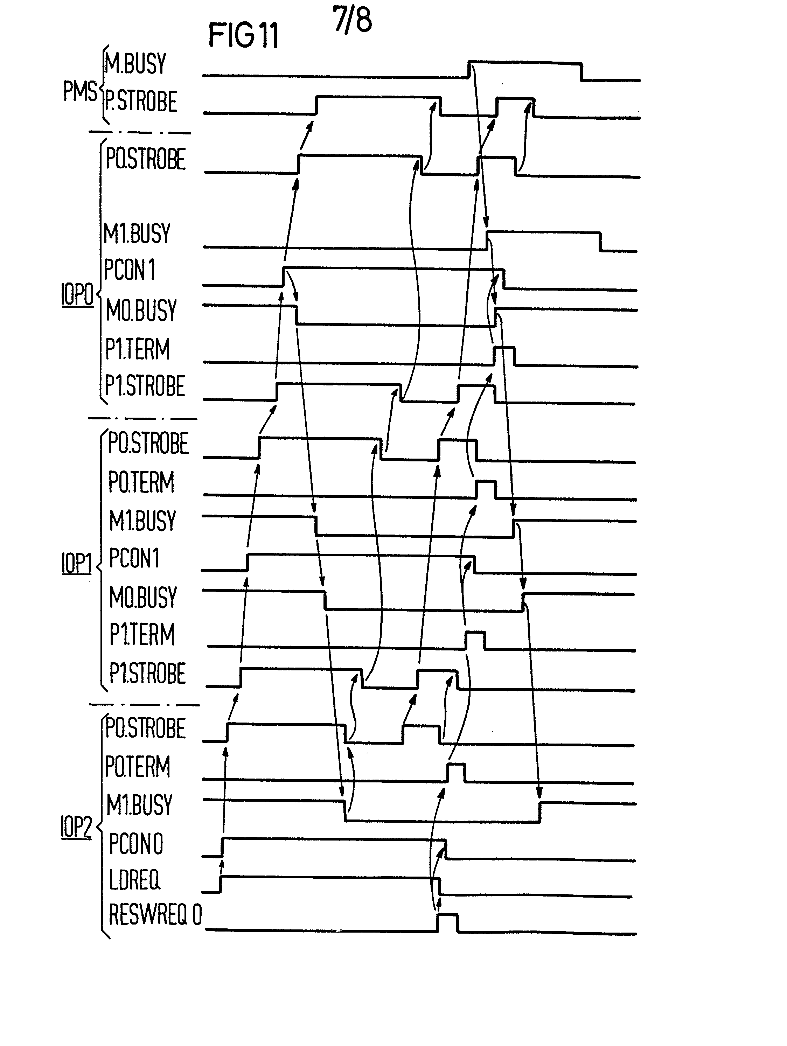

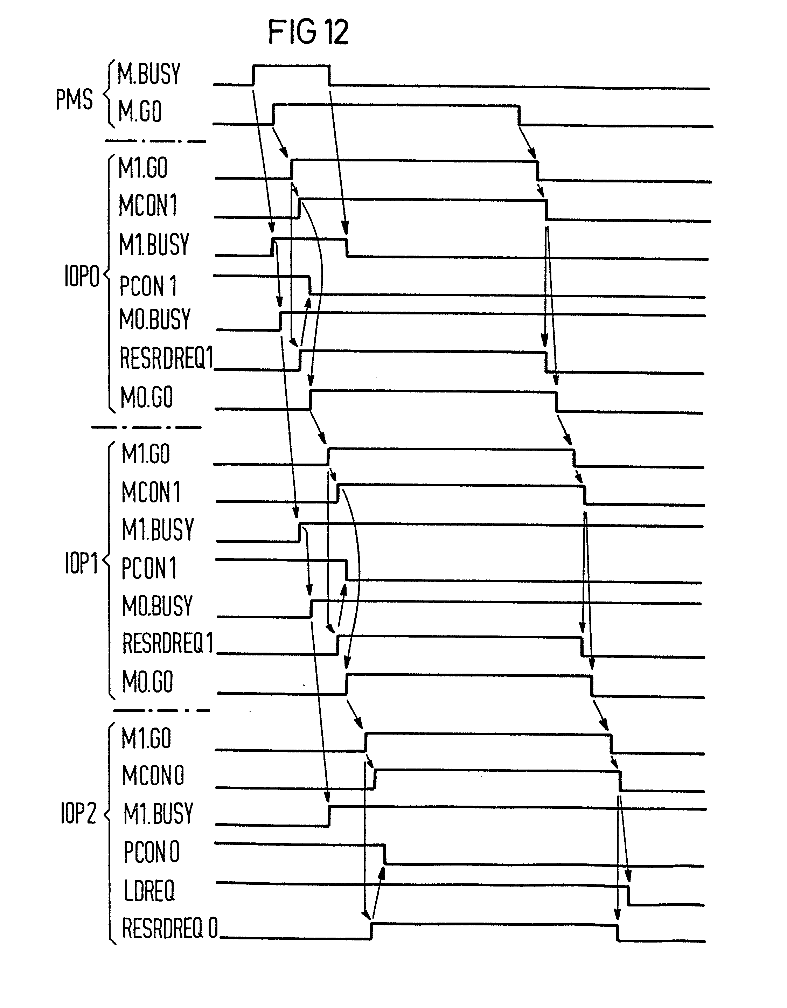

Abschließend sei das Zusammenwirken der einzelnen Schnittstellensteuerungen DSY innerhalb der Kette bei der Durchführung von Speicheroperationen zwischen dem letzten Prozessor IO2 der Kette und dem Arbeitsspeicher PMS anhand von FIG 3 in Verbindung mit dem Impulsdiagramm von FIG 11 und FIG 12 näher erläutert.

Bei Vorliegen einer Anforderung wird diese mit dem Signal LDREQ von der Prozessorschnittstellensteuerung IOPSS-ST gemeldet und von der Steuerung POZ-ST (FIG 4) das Zustandssignal PCONO gesetzt. Dies führt gemäß FIG 5 zur Erzeugung des Schnittstellensignals PO.STROBE, das als Anforderungssignal über die Schnittstelle SSD zur Stufe des mittleren Prozessors IOP1 weitergeleitet und dort als Anforderung P1.STROBE erkannt wird. Handelt es sich dabei um die einzige Anforderung innerhalb der Kette, so wird über das ausgelöste Zustandssignal PCON1 die Anforderung als POSTROBE zum ersten Prozessor IOPO und schließlich nach Wiederholung des gleichen Steuerungsablaufes zum Port des Arbeitsspeichers PMS weitergeleitet, wo sie als P.STROBE endet, und die gleichzeitig mit übertragenen Parameterdaten PO.DATA sowie die Identifizierkennung PO.REQUID für gültig erklärt.

Dieses Fortleiten der Anforderung ist in FIG 11 durch die linke aufsteigende Pfeilkette angedeutet, wobei die Zeitverschiebungen durch die internen Lauf- und Einphasungszeiten sowie durch die Übertragungszeiten über die einzelnen Schnittstellen bedingt sind.

Ausgehend von PMS-Signal M.BUSY = O wird mit dem Zustandssignal $\overline{PCON1}$ im ersten Prozessor IOPO das Signal MO.BUSY = O

nach rückwärts gesendet, das über M1.BUSY, MO.BUSY des
zweiten Prozessors IOP1 als Quittung M1.BUSY = O entsprechend
der ersten absteigenden Pfeilkette beim anfordernden
Prozessor IOP2 anlangt und diesem anzeigt, daß die Verbindung zum Arbeitsspeicher PMS aufgebaut ist und dieser
für eine Schnittstellenoperation bereit ist.

Gemäß FIG 5 führt die Quittung M1.BUSY = O zur Beendigung
des Anforderungssignales PO.STROBE beim letzten Prozessor
IOP2, was sich von Stufe zu Stufe entsprechend der zweiten
aufsteigenden Pfeilkette bis zum Arbeitsspeicher  PMS
fortsetzt.

Handelt es sich um eine Schreiboperation, so hat der
aktive Prozessor IOP2 die Strobesequenz zu steuern, so
daß gemäß FIG 5 nach dem ersten Strobeimpuls PO.STROBE
im vorgegebenen Abstand ein zweiter Impuls PO.STROBE
erzeugt wird, der wie der erste Impuls zusammen mit dem
zugehörigen Datenwort zum Arbeitsspeicher PMS weitergeleitet wird. Abhängig von der Art der Schreiboperation
können auf den zweiten Strobeimpuls noch drei weitere
folgen oder nicht. Das Ende der Schreiboperation wird
von der Prozessorschnittstellensteuerung IOPSS-ST mit
dem Signal RESWREQO gemeldet. Im angenommenen Falle
folgt dieses Endesignal bereits nach dem zweiten
Strobeimpuls POSTROBE bei gleichzeitigem Abschalten des
Anforderungssignales LDREQ und  löscht das Zustandssignal PCONO ( FIG 4). Außerdem wird gemäß FIG 8 das
Schnittstellensignal PO.TERM gebildet,das als Endesignal
den bestehenden Verbindungsweg innerhalb der Kettenschaltung bis zum ersten Prozessor IOPO wieder auslöst,
indem jeweils das Zustandssignal PCON1 in den einzelnen
Schnittstellensteuerungen DSY gelöscht wird.RESWREQO kann
auch verzögert ausgelöst werden,um z.B. noch eine PSM-
Quittung abzuwarten.
Der Vollständigkeit halber sei noch erwähnt, daß in an
sich bekannter Weise jeder Rückflanke eines Strobeimpulses PO.STROBE in der Prozessorschnittstellensteuerung IOPS-ST
ein Adressenzähler um Eins erhöht wird, um die Adresse
für das nächste zu übertragende Datenwort zu liefern.
Von diesem Adressenzähler wird zweckmäßig auch das Endesignal RESWREQO abgeleitet.

Bei einer Leseoperation erfolgt der Verbindungsaufbau zum
Arbeitsspeicher PMS aufgrund des auslösenden Signales
LDREQ in der gleichen Weise wie bei einer Schreiboperation,
d. h. es wird ein Anforderungssignal PO.STROBE erzeugt
und zusammen mit den Parameterdaten zum Arbeitsspeicher
übertragen. Nach Abschalten dieses Strobeimpulses werden
jedoch keine weiteren Strobeimpulse wie bei einer Schreiboperation erzeugt, sondern der aktive Prozessor IOP2
wartet auf die Übertragung der Lesedaten vom Arbeitsspeicher PMS, was ihm durch das Signal M1.GO als Quittung
angezeigt wird. Dieses Signal hat seinen Ursprung im
PMS-Signal M.GO, das als M1GO den ersten Prozessor
IOPO der Kette erreicht. Dort wird das Zustandssignal
MCON1 erzeugt und damit das M1.GO als MO.GO weitergeleitet. Außerdem wird mit dem Folgesignal RESRDREQ1
das Zustandssignal PCON1 gelöscht. Dieser Ablauf wiederholt sich entsprechend der linken abfallenden Pfeilkette
in FIG 12 nachfolgend im Prozessor IOP1 und schließlich
im aktiven Prozessor IOP2, beim letzteren allerdings mit
dem Unterschied, daß hier das Zustandssignal MCONO und
das Signal RESRDREQO erzeugt werden und das Zustandssignal PCONO gelöscht wird. Mit dem Setzen der Zustandssignale MCON1 bzw. MCONO wird so der Weg vom Arbeitsspeicher PMS zum aktiven Prozessor IOP2 aufgebaut und
gleichzeitig mit Löschen der Zustandssignale PCON1 bzw.
PCONO in den einzelnen Kettenstufen der Verbindungsweg
für die Schreibanforderung freigegeben, so daß parallel
zur Lesedatenübertragung bereits ein neuer Verbindungsweg aufgrund einer Anforderung eines anderen Prozessors
zum Arbeitsspeicher PMS aufgebaut werden kann. Der be-

0082511

stehende Verbindungsweg vom Arbeitsspeicher PMS zum aktiven Prozessor IOP2 wird erst dann wieder freigegeben, wenn die Lesedaten vollständig übertragen sind und das PMS-Signal M.GO = O erscheint, das von Stufe zu Stufe weitergeleitet wird und die Zustandssignale MCON1 bzw. MCONO wieder löscht, so daß schließlich auch die Signale RESRDREQ1 bzw. RESRDREQO wieder verschwinden, wie die zweite abfallende Pfeilkette in FIG 12 zeigt.

Während der Lesedatenübertragung werden abhängig von der Art der Leseoperation wiederum jeweils nur ein Strobeimpuls M.STROBE oder aber vier aufeinanderfolgende Strobeimpulse zusammen mit Lesedaten M.DATA übertragen, wobei aus den Strobeimpulsen in an sich bekannter Weise Schreibimpulse gebildet werden, mit denen die Daten unter der jeweiligen Adresse in den Empfangspuffer des aktiven Prozessors IOP eingetragen werden. Damit bei der Übertragung von Daten von und zum Arbeitsspeicher die Breite der Gültigkeitsbereiche der durchzuschaltenden Daten sowie ihre relative Lage zum jeweiligen Gültigkeitsstrobe annähernd konstant bleibt, werden, wie bereits anhand von FIG 3 beschrieben, die Daten M.DATA, P.DATA, REQUID in jeder Kettenstufe über sogenannte Latchregister L-REG... geleitet und mit von den begleitenden Gültigkeitssignalen MO.STROBE, PO.STROBE oder MO.WHARDER abgeleiteten Steuerimpulse freigegeben. Außerdem werden die Gültigkeitssignale wie beschrieben jeweils aufbereitet.

Insgesamt führt also die Kettung mehrerer Prozessoren über die ihm individuell zugeordneten Schnittstellensteuerungen DSY gemäß der Erfindung zu einer äußerst leistungsfähigen und flexiblen Anordnung mit unveränderten Schnittstellenbedingungen am Speicherport.

Um den funktionellen Zusammenhang der einzelnen Signale in den einzelnen Figuren klar in Erscheinung treten zu

0082511

lassen, wurde auf eine zusätzliche Darstellung von
im einzelnen benötigten Einphasungstakten und von
zur zeitlichen Auflösung benötigten Zwischenschaltungen
verzichtet, da die Realisierung der notwendigen
Steuerungen durch den einschlägigen Fachmann ohne
weiteres anhand der vorliegenden Angaben möglich ist.

<u>Patentansprüche</u>

1. Datenverarbeitungsanlage mit zentralem Arbeitsspeicher (PMS), der eine Reihe von Ports (PORT1 bis PORTx) zum Anschluß jeweils einer eigenständigen Prozessoreinheit, z. B. Zentraleinheit (CPU), Ein-/Ausgabewerk (IOP), aufweist, d a d u r c h   g e k e n n z e i c h n e t, daß zum Anschluß mehrerer Prozessoreinheiten (z. B. IOP0 bis IOP2) an einen einzigen Port (z. B. PORTx) die Prozessoreinheiten eine Kettenschaltung bilden und gleich - artige Schnittstellensteuerungen (DSY) aufweisen, die die Anschlüsse der für alle Prozessoren der Kettenschaltung gleichartigen Schnittstellen (SSD) in beiden Richtungen überwachen und steuern, wobei die Anzahl der Schnittstellenanschlüsse gegenüber der der Portschnittstelle (SSI) erweitert ist,
daß die einzelnen Schnittstellensteuerung (DSY) in gegenseitiger Abhängigkeit voneinander arbeiten und die in den Prozessoren der Kettenschaltung entstehenden Anforderungen für den Arbeitsspeicher (PMS) mittels einer wechselseitigen Blockierung ohne Adressensteuerung einzeln nacheinander wirksam werden lassen, als wäre nur ein einziger Prozessor an den Port des Arbeitsspeichers angeschlossen,
und daß zur Abwicklung des Zugriffs zum Port und zur Durchführung der jeweiligen gewünschten Speicheroperation in den den Speicherverkehr steuernden Schnittstellenleitungen jedes Prozessors der Kettenschaltung Weichensteuerungen (STB-ST, TERM-ST, ID-ST, LOCK-ST, O31, U31 bis U33) vorgesehen sind, die abhängig von ggfs. durch Schnittstellensignale (z.B. PO.STROBE, M1.GO) beeinflußten Zustandssignalen (PCON0,1 bzw. MCON0, 1) entweder ankommende Schnittstellensignale weiterleiten oder aber beim Aktivsein des eigenen Prozessors sperren bzw. eigene Signale weiterleiten.

2. Datenverarbeitungsanlage nach Anspruch 1, d a -
d u r c h   g e k e n n z e i c h n e t ,
daß zur Kennzeichnung einer Anforderung (LDREQ) durch
einen der Prozessoren (z.B. IOP1) der Schnittstellenanschluß (PO.STROBE) für das Gültigkeitszeichen zur
Übertragung von Daten vom Prozessor zum Arbeitspeicher
(PMS) verwendet wird,
daß in jeder Schnittstellensteuerung (DSY) eine  nach
dem FIFO-Prinzip arbeitende Überwachungseinrichtung
(POZ-ST) vorgesehen ist, die das Vorliegen von Anforderungen aus dem eigenen Prozessor (z.B. IOP1) und
aus den nachgeordneten Prozessoren (z.B. IOP2) überwacht und die die jeweils zuerst eintreffende Anforderung (P1.STROBE  bzw. LDREQ) wirksam werden läßt,
daß abhängig von von der Überwachungseinrichtung
(POZ-ST) erzeugten Zustandssignalen (PCONO  und PCON1
bzw. $\overline{\text{PCON1}}$) der für den Verbindungsaufbau zum Port
(PORTx) benötigte Schnittstellenanschluß (PO.STROBE)
sowie der den Belegungszustand des Ports kennzeichnende Schnittstellenanschluß (MO.BUSY) für die nachgeschalteten Prozessoren (IOP2) der Kette über die zugehörigen Weichensteuerungen (STB-ST  bzw. 031) beeinflußt werden,
daß nach Durchschaltung des Anforderungssignales vom
anfordernden Prozessor (z.B. IOP1) zum Port (PORTx)
vom ersten Prozessor (IOPO) der Kette aus nach rückwärts der den Belegungszustand des Ports kennzeichnende Schnittstellenanschluß (MO.BUSY) für das Belegungszustandszeichen des Ports zum anfordernden Prozessor
(IOP1) hin freigegeben wird und daß das danach im
anfordernden Prozessor (IOP1) über den Schnittstellenanschluß (M1.BUSY) eintreffende Freizeichen des Ports
das die Anforderung auslösende Gültigkeitssignal
(PO.STROBE), mit dem gleichzeitig die Parameterdaten
auf den Datenleitungen (PO.DATA) wirksam geschaltet
worden sind, abschaltet.

3. Datenverarbeitungsanlage nach Anspruch 2, d a - d u r c h  g e k e n n z e i c h n e t , daß bei einer Schreibanforderung eines Prozessors (z.B. IOP2) nach Übertragung der einleitenden Parameterdaten an den Port (PORTx) und Abschalten des Gültigkeitssignales (PO.STROBE) für die Parameterdaten die Schreibdaten in an sich bekannter Weise zum Port übertragen werden, daß mit Beendigung der Schreibdatenübertragung aus dem aktiven Prozessor (IOP2) über eine nur für die Kettenschaltung vorgesehene Schnittstellenleitung (Anschluß PO.TERM) das Schreibende an alle in Richtung zum Arbeitsspeicher (PMS) vorgeschaltete Prozessoren (IOP0 und IOP1) übertragen und in diesen Prozessoren durch die dortige Überwachungseinrichtung (POZ-ST) das mit der Anforderung gesetzte Zustandssignal (PCON1) wieder gelöscht wird, so daß andere Anforderungen bearbeitet werden können, und daß das im aktiven Prozessor (IOP2) mit der Anforderung gesetzte Zustandssignal (PCON0) wieder gelöscht wird.

4. Datenverarbeitungsanlage nach Anspruch 2, d a - d u r c h  g e k e n n z e i c h n e t , daß bei einer Leseanforderung durch einen Prozessor (z.B IOP2) nach Übertragung der einleitenden Parameterdaten an den Port (PORTx) die Übertragung der Lesedaten aus dem Arbeitsspeicher (PMS) in an sich bekannter Weise durch ein Schnittstellensignal (M.GO) des Ports eingeleitet wird, daß schrittweise bis zum aktiven Prozessor (IOP2) abhängig von den in den vorgeschalteten Prozessoren (IOP0 und IOP1) erzeugten Zustandssignalen (MCON1) der Überwachungseinrichtung (POZ-ST) weitergeleitet und damit der Verbindungsweg vom Arbeitsspeicher (PMS) zum aktiven Prozessor (IOP2) hergestellt wird, während gleichzeitig durch Löschen der durch die Anforderung ausgelösten Zustandssignale (PCON1 bzw. PCONO) in
den am Übertragungsweg beteiligten Prozessoren (IOPO
bis IOP2) der Verbindungsweg vom aktiven Prozessor
(IOP2) zum Port (PORTx) wieder freigegeben wird,
und daß nach Übertragung der Lesedaten mit Abschalten
des begleitenden Schnittstellensignales (M.GO) im
Port die in den am Verbindungsweg zum aktiven Prozessor
(IOP2) beteiligten Prozessoren (IOPO bis IOP2) gesetzten
Zustandssignale (MCON1 bzw. MCONO) wieder gelöscht
werden.

5. Datenverarbeitungsanlage nach einem der Ansprüche
1 bis 4, d a d u r c h   g e k e n n z e i c h ne t ,
daß in jedem/am Verbindungsweg zum bzw. vom Port (PORTx)
beteiligten Prozessoren (IOPO bis IOP2) die ankommenden
und weiterzuleitenden Gültigkeitssignale (P1.STROBE,
M1.STROBE)erneuert werden und daß die zugehörigen Daten
(P.DATA, M.DATA) durch von den erneuerten Gültigkeitssignalen (PC.STROBE, MO.STROBE) abgeleitete Steuersignale
(LOADPLA, LOADMLA) jeweils in Registern (L-REG2, L-REG1)
zwischengespeichert werden.

6. Datenverarbeitungsanlage nach einem der Ansprüche
1 bis 5, d a d u r c h   g e k e n n z e i c h n e t ,
daß die Schnittstellensteuerungen (DSY) der einzelnen
Prozessoren (IOPO bis IOP2) in der Kette zwei weitere
nur für die Kettenschaltung vorgesehene Schnittstellenleitungen (LOCKREQ, DSYLOCK) und eine damit gekoppelte
Blockierungs- und Überwachungssteuerung (LOCK-ST) aufweisen, die Anforderungen der einzelnen Prozessoren
bei LOCK-Betrieb des Ports (PORTx) in der Kettenschaltung in ähnlicher Weise wie Speicheranforderungen nacheinander wirksam werden läßt,
daß das Anforderungssignal (LOCKREQ,P1.LOCKREQ) eines
Prozessors über eine Weichensteuerung (U103, 0101)
als Sperranforderung über den einen Schnittstellenanschluß (PO.LOCKREQ) in Richtung Kettenanfang und bei eigener
Anforderung zusätzlich als Sperrsignal über den anderen
Schnittstellenanschluß (MO.DSYLOCK) auch in Richtung
Kettenende gesendet wird,
und daß ein fehlendes Sperrsignal an dem vom Kettenanfang kommenden Schnittstellenanschluß (M1.DSYLOCK)
bei eigener Anforderung ein Quittungssignal (LOCKACK)
auslöst oder bei fremder Anforderung in Richtung Kettenende über den zugehörigen Schnittstellenanschluß
(MO.DSYLOCK) weitergeleitet wird.

7. Datenverarbeitungsanlage nach einem der Ansprüche
1 bis 6, d a d u r c h   g e k e n n z e i c h n e t ,
daß zur Identifizierung des Ursprungsortes bei während
einer Schreiboperation auftretenden, aber nach Abbau
der Verbindung zwischen dem aktiven Prozessor (z.B. IOP1)
und dem Port (PORTx) nicht mehr zuordnungsbaren Schreib-
fehlern (WHARDER) mit jeder Anforderung (PO.STROBE) eines
Prozessors zusammen mit den Parameterdaten eine Identifizierkennung abhängig von einer Weichensteuerung (ID-ST)
über   Schnittstellenleitungen (Anschlüsse PO.
REQUID) übertragen wird, die dann mit dem Fehlersignal
(M.WHARDER) vom Port über weitere Schnittstellenleitungen
(Anschlüsse M.REQUID) der Schnittstellensteuerung (DSY)
zurückgesendet und vom betroffenen Prozessor ausgewertet wird.
wobei das Fehlersignal in gleicher Weise wie die übrigen
Signale jeweils erneuert und die Identifizierkennung wie
die Daten in Registern (L-REG4, L-REG3) zwischengespeichert werden.

8. Datenverarbeitungsanlage nach einem der Ansprüche
1 bis 7, d a d u r c h   g e k e n n z e i c h n e t ,
daß jede Schnittstellensteuerung (DSY) der Prozessorkette zwei Schalter (S-FIOP  und S-LIOP) aufweist, die kennzeichnen, ob der zugehörige Prozessor der erste
(FIOP) oder der letzte (LIOP) Prozessor in der Kette
ist, und die verhindern, daß Schnittstellenanschlüsse
wirksam werden, wenn keine Schnittstellenleitungen angeschlossen sind.

9. Datenverarbeitungsanlage nach Anspruch 7 und 8
d a d u r c h   g e k e n n z e i c h n e t , daß bei
nur drei Prozessoren (IOP0, IOP1 und IOP2) als
Kettenschaltung die Schalter(S-FIOP und S-LIOP) unmittelbar - die Identifzierkennung auf zwei Leitungen
(Anschlüsse PO.REQUID0 und PO.REQUID1) liefern.

## FIG 1

## FIG 2

FIG 3    2/8

0082511

FIG 4

## FIG 5

## FIG 6

# FIG 7

PARAMETER     WAIT       STREAMEN            WAIT

1. DAT-W       2. DAT-W     3. DAT-W     4. DAT-W

5/8

0082511

# FIG 8

TERM-ST

PO.TERM — 081 [1] — U81 [&] — P1.TERM, LIOP, FIOP, PCON1

U82 [&] — FIOP, RESWREQ0, PCON0

# FIG 9

ID-ST

PO.REQUID0 — 091 [1]

PO.REQUID1 — 092 [1]

U91 [&] — LIOP — P1.REQUID0

U92 [&] — P1.REQUID1, PCON1

U93 [&] — FIOP

U94 [&] — LIOP, PCON0

# FIG 10

PO.LOCKREQ — 0101 [1]

U102 [&] — P1.LOCKREQ, LIOP

U103 [&]

LOCK-ST

M1.DSYLOCK — U104 [&] — FIOP

0103 [1] — M0.DSYLOCK

U105 [&]

LOCKACK

LOCKREQ0

FIG 11

PMS
- M.BUSY
- P.STROBE

IOP0
- P0.STROBE
- M1.BUSY
- PCON1
- M0.BUSY
- P1.TERM
- P1.STROBE

IOP1
- P0.STROBE
- P0.TERM
- M1.BUSY
- PCON1
- M0.BUSY
- P1.TERM
- P1.STROBE

IOP2
- P0.STROBE
- P0.TERM
- M1.BUSY
- PCON0
- LDREQ
- RESWREQ 0

FIG 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | IBM TECHNICAL DISCLOSURE BULLETIN, Band 23, Heft 5, Oktober 1980, Seiten 1801-1804, NEW YORK, US BIRNEY et al.: "Shared storage for multiple processors" * Figur 1 auf Seite 1801; Seite 1802, Zeilen 14-23, Figur 2; Seite 1804, Zeilen 5-8 * | 1,6 | G 06 F  3/04 G 06 F  13/00 |
| | --- | | |
| A | IBM TECHNICAL DISCLOSURE BULLETIN, Band 23, Heft 4, September 1980, Seiten 1610-1614, NEW YORK, US BEUKEMA et al.: "Asynchronous command prioritization" * Seite 1610, Zeilen 1-5, Figuren 1,2; Seite 1611, Zeilen 5-7; Seite 1612, Zeilen 1-7 * | 2 | |
| | --- | | RECHERCHIERTE SACHGEBIETE (Int. Cl. 3) |
| A | US-A-4 301 379 (NCR) * Spalte 8, Zeilen 40-46; Spalte 10, Zeilen 1-8; Figur 8 * | 8 | G 06 F  3/04 G 06 F  13/00 |
| | --- | | |
| A | US-A-3 665 398 (KAWAI) | 1 | |
| | ----- | | |

Der vorliegende Recherchenbericht wurde für alle Patentansprüche erstellt.

| Recherchenort DEN HAAG | Abschlußdatum der Recherche 30-03-1983 | Prüfer DHEERE R.F.B.M. |
|---|---|---|